# EUROPÄISCHE PATENTANMELDUNG

(11) **EP 4 198 793 A1**
(43) Veröffentlichungstag der Anmeldung: **21.06.2023**
(21) Anmeldenummer: 21215421.5
(22) Anmeldetag: 17.12.2021
(51) Int. Cl.: G06F 21/76, G06F 30/34, H03K 19/17728

(54) **VERFAHREN ZUM ÄNDERN EINER BITBREITE EINER FPGA-KONFIGURATION**

(71) Anmelder: dSPACE GmbH, 33102 Paderborn (DE)
(72) Erfinder: Lubeley, Dominik, 33102 Paderborn (DE); Kalte, Heiko, 33102 Paderborn (DE)

(57) **Zusammenfassung**

Gegenstand der Erfindung ist ein Verfahren zum Ändern einer Bitbreite einer FPGA-Konfiguration für einen FPGA (2), die FPGA-Konfiguration aufweisend eine Mehrzahl mindestens 2ⁿ Bit enthaltene Datensignale mit n ε 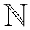 und ≥ 3 und das Verfahren aufweisend den Schritt: Bei einem Überschreiten eines Schwellwertes einer Stromaufnahme und/oder einer Temperatur des FPGA (2) und/oder Vorliegen eines Ersetzungssignals, Ersetzen während eines Ausführens der FPGA-Konfiguration auf dem FPGA (2) von k niedrigwertigster Bits der Datensignale jeweils durch eine Null mit k ε 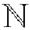 und ≥ 2.

## Beschreibung

### Technisches Gebiet

Die Erfindung betrifft ein Verfahren zum Ändern einer Bitbreite einer FPGA-Konfiguration für einen FPGA, die FPGA-Konfiguration aufweisend eine Mehrzahl mindestens 2ⁿ Bit enthaltene Datensignale mit n ε 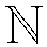 und ≥ 3.

### Hintergrund der Erfindung

Ein FPGA ist ein integrierter Schaltkreis der Digitaltechnik, in den eine logische Schaltung geladen werden kann. Im Unterschied zur Programmierung von Computern, Mikrocontrollern und Steuerungen meint der Begriff "Programmierung" bzw. "Bauen des FPGA" bei FPGAs nicht nur die Vorgabe zeitlicher Abläufe, sondern auch die Definition der angestrebten Schaltungsstruktur. Diese Schaltungsstruktur wird mittels einer Hardware-Beschreibungssprache formuliert und dann softwaremäßig in eine Konfigurationsdatei übersetzt, die vorgibt, wie die Elemente im FPGA verschaltet werden sollen. Bei der FPGA-Programmierung erzeugt man also eine Beschreibung der Hardware-Struktur, die dann mit Hilfe von Synthese- und Routing-Werkzeugen auf den eigentlichen FPGA übertragen wird.

Diese Hardware-Beschreibung findet typischerweise in speziellen Sprachen, wie VHDL oder Verilog statt. Anstelle von "FPGA-Programm" spricht man dabei deshalb auch von einer "FPGA-Konfiguration". Im Gegensatz zur Programmierung von Computern, Mikroprozessoren und Steuerungen richtet sich die FPGA-Programmierung somit nicht an einem vorgegebenen Betriebssystem und einer Treiberbasis aus. Stattdessen zielt die FPGA-Programmierung auf die Definition von Strukturen im Halbleiter ab, die später die beabsichtigten Funktionen ausführen. Auf diese Weise ist ein Spezialisierungs- und Parallelitätsgrad erzielbar, der von herkömmlichen, vorgefertigten Mikroprozessoren nur schwer zu erreichen ist.

Im Bereich der Hardware in the Loop-Simulation (HIL-Simulation) und bei Rapid Control Prototyping-Systemen (RCP-Systemen) können Echtzeitsimulationen, zum Beispiel in den technischen Bereichen Leistungselektronik und Elektromobilität, schon längere Zeit nicht mehr durch reine Prozessormodelle abgedeckt werden. Bei vielen Anwendungsfällen, wie Simulationen, in denen sehr schnelle Regelkreise erforderlich sind, müssen diese durch FPGA-Modelle ergänzt oder gar ersetzt werden. Derartige Hardware für HIL-Simulationen und bei Rapid Control Prototyping-Systeme verfügen über eine Vielzahl von FPGAs für unterschiedliche Funktionalitäten bzw. Schaltungskomponenten, beispielsweise FPGAs für eine Kommunikation in einem Echtzeitnetzwerk und FPGAs, welche unterschiedliche I/O Funktionalitäten auf I/O Kanälen realisieren können.

Mittels abstrahierender FPGA Entwicklungsumgebungen können Nutzer auch ohne detaillierte Kenntnisse eines FPGAs und Toolflows eigene Hardware entwickeln. Im Bereich des Rapid Control Prototyping (RCP) können schnelle Regelkreise auf dem FPGA entworfen und beispielsweise auf einem Hardware Board als Prototypen-Steuergerät betrieben werden. Mit den steigenden Anforderungen an schnelle Regelkreise beispielsweise im E-Drive Umfeld, in der Leistungselektronik oder bei der Motorsteuerung, beispielsweise zur Zylinderinnendruckmessung, werden immer leistungsfähigere FPGAs benötigt. In Zukunft wird dieser Trend durch Auslagerung ressourcenintensiver Algorithmen, wie beispielsweise image processing, von Fahrerassistenzsysteme noch intensiviert.

Insofern ist davon auszugehen, dass sogenannte Prototyping Plattformen in Zukunft ein viel größeres Nutzerspektrum abzudecken haben als noch vor 5 Jahren. So ist anzunehmen, dass auf derselben FPGA Plattform, auf der Nutzer A nur eine kleine PWM Vermessung und Regelung betreibt, Nutzer B rechenintensive Fahrerassistenzsysteme laufen lässt. Dabei kann das Design von Nutzer A die gesamte FPGA-Fläche, jedoch nur 2 Watt Leistung benötigen, während das Design von Nutzer B nur die halbe FPGA-Fläche benutzt, jedoch 8 Watt Leistung benötigt. Ebenso kann Nutzer C wie Nutzer A den gesamten FPGA verwenden, jedoch 20 Watt Leistung benötigen, da sein System "aktiver" ist, beispielsweise eine höhere Toggle Rate aufweist. Die Leistungsaufnahme ist jedoch proportional zur Toggle Rate der Schaltelemente, beispielsweise FlipFlops, in einem FPGA.

Im Bereich des Rapid Control Prototyping (RCP) ist bei spontanen Änderungen am Regelungsmodell oft keine Zeit für eine zeitintensive und präzise Leistungsanalyse zur Vorabqualifizierung einer FPGA Echtzeitapplikation. Schlägt ein WatchDog des FPGA im laufenden Betrieb an, beispielsweise auf einer Testfahrt mit einer thermischen Überlastung, ist es bisher dem Nutzer überlassen, in seiner FPGA-Konfiguration manuell mögliche Stromsparmechanismen aktiv werden zu lassen. Solche Änderungen sind jedoch sehr aufwendig.

### Beschreibung der Erfindung

Ausgehend von dieser Situation ist es eine Aufgabe der vorliegenden Erfindung, ein Verfahren anzugeben, durch welches eine FPGA-Konfiguration leistungsadaptiv betreibbar ist, um dynamisch auf ein zu hohe Leistungsaufnahme reagieren zu können.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch ein Verfahren zum Ändern einer Bitbreite einer FPGA-Konfiguration für einen FPGA, die FPGA-Konfiguration aufweisend eine Mehrzahl mindestens 2ⁿ Bit enthaltene Datensignale mit n ε 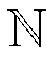 und ≥ 3 und das Verfahren aufweisend den Schritt:
Bei einem Überschreiten eines Schwellwertes einer Stromaufnahme und/oder einer Temperatur des FPGA und/oder Vorliegen eines Ersetzungssignals, Ersetzen während eines Ausführens der FPGA-Konfiguration auf dem FPGA von k niedrigwertigster Bits der Datensignale jeweils durch null mit k ε 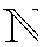 und ≥ 2.

Durch das vorgeschlagene Verfahren lässt sich ein FPGA leistungsadaptiv betreiben, um dynamisch auf zu hohe Leistungsaufnahme reagieren zu können. Konkret wird vorgeschlagen, dass die Bitbreite dynamisch, zur Laufzeit einer FPGA-Konfiguration, anpassbar ist. Mit anderen Worten wird eine (Pseudo-)Bitbreiten Anpassung vorgeschlagen, die dynamisch, bei Überschreiten des Schwellwertes, also bei Überschreiten einer Stromaufnahme und/oder Temperatur des FPGA, vorgenommen wird. Entsprechend kann dynamisch auf zu hohe Leistungsaufnahmen und/oder Temperaturen des FPGA reagiert werden.

Prozessoren beherrschen in der Regel nativ nur Integer und Floating-Point Datentypen nach IEEE 754. Die Prozessorarchitektur legt die Bitbreiten fest, welche bei Floating-Point 32 Bit, sogenannte Single Precision, und 64 Bit, sogenannte Double Precision, betragen. In einem FPGA sind beliebige Bitbreiten möglich, da eine entsprechende Logik dazu im FPGA generiert werden kann. Regelmäßig verwendet wird eine sogenannte Floating-Point Modellierung. Die Verfügbarkeit von immer größeren FPGAs und die Unterstützung von Floating-Point Modellierung in FPGA Modellierungstools führen jedoch zu einem höheren FPGA Ressourcenbedarf der Floating Point-Modellierung zu einer erhöhten Leistungsaufnahme, da immer mit der vollen Bitbreite von in der Regel 32 Bit oder 64 Bit gerechnet wird. Das vorgeschlagene Verfahren löst jedoch dieses Dilemma, da die Schaltaktivität bzw. Toggle Rate der Schaltelemente im FPGA, beispielsweise FlipFlops, die jeweils eine Umladung zur Folge hat, reduziert werden.

Das Ersetzen durch null, auch Nullsetzen genannt, ist bevorzugt auf eine Mantisse eines Floating-Point-Datentyps und/oder Fixed-Point-Datentyps anwendbar. Zuvor kann die FPGA-Konfiguration mit reduzierter Genauigkeit simuliert werden. Die Anzahl der auf null zu setzenden k Bits kann variabel anpassbar sein. Durch die bitweise Einspeisung des Ersatzwertes 0 für beispielsweise die unteren 29 Bit der Mantisse kann die Genauigkeit eines Double Precision Datensignals auf die eines Single Precision Datensignals reduziert werden, was für viele Anwendungen jedoch ausreichend ist.

Zusammengefasst wird eine adaptive FPGA Leistungsregulierung im thermischen Ausnahmezustand des FPGAs vorgeschlagen, anstelle eines im Stand der Technik praktizierten Shutdowns des FPGA im RCP Steuergerät. Während im Stand der Technik nur eine Reduktion der zeitlichen Auflösung bzw. Genauigkeit ermöglicht ist, können durch das vorgeschlagene Verfahren schnelle Regelkreise schnell belassen werden und nur Auflösung bzw. Genauigkeit reduziert werden. Die dabei erreichte Leistungseinsparung ist unabhängig von der Clock Region. Denkbar ist ferner, dass heiße Regionen des FPGA gezielt "herunter gekühlt" werden, wenn diese heißen Regionen bekannt sind und dort gezielt mit dem vorgeschlagenen Verfahren die Datenbreite reduziert wird. Letztlich leistet das vorgeschlagene Verfahren einen Beitrag zur funktionalen Sicherheit und erlaubt, beliebige Rechenwerke zu manipulieren, ohne dass Datenpfad-Elemente angepasst werden müssen.

Nach einer bevorzugten Weiterbildung umfasst das Ersetzen ein Einfügen wenigstens eines Reglers und wenigstens eines Signalsteuerungsblocks, welcher wenigstens eine Signalsteuerungsblock ausgestaltet ist, die k niedrigwertigsten Bits der Datensignale jeweils durch eine Null zu ersetzen, und welcher wenigstens eine Regler ausgestaltet ist, bei einem Überschreiten des Schwellwertes der Stromaufnahme und/oder der Temperatur des FPGAs und/oder Vorliegen des Ersetzungssignals den wenigstens einen Signalsteuerungsblock zum Ersetzen anzusteuern. Bevorzugt ist der Regler eingerichtet, die Stromaufnahme des FPGAs und/oder die Temperatur des FPGAs zu messen. Sobald die gemessene Stromaufnahme und/oder die Temperatur einen Schwellwert überschreitet, kann der Regler den Signalsteuerungsblock mindestens eines Datensignals aktivieren. In der Folge kann der Signalsteuerungsblock eine Bitbreite des Datensignals dadurch reduzieren, dass die k niedrigwertigsten Bits auf null gesetzt werden. Der Signalsteuerungsblock kann in I/O Datensignal-, insbesondere Ports, Konstanten-, Multiplikations-, Divisions- und/oder DFT-Blöcke eingefügt werden. Ebenso kann der Signalsteuerungsblock in Additions-, Subtraktions-, Register-, Delay-, Shift-, Relations- Upsample-, Downsample- und/oder BRAM-Blöcke eingefügt werden.

Sofern das I/O-Datensignal Fixed-Point-Daten erhält, kann aus einer Modellanalyse erkannt werden, ob das Datensignal reduzierbar ist, und insbesondere nur dann der Signalsteuerungsblock eingefügt werden. Ebenso kann der Signalsteuerungsblock, an dem eine Bitbreitenreduktion erfolgt, feingranular ausgewählt werden. Eine entsprechende Auswahlregelung kann mit einer Hysterese erfolgen, wobei erst nach Unterschreiten eines zweiten niedrigeren Schwellwerts wieder mit der vollen Bitbreite gearbeitet werden kann. Ferner kann der Regler über eine dedizierte Fläche des FPGA oder einen externen Prozessor parametrierbar sein. Alternativ kann der Regler in einem Modellierungsprogramm, beispielsweise Simulink, angezeigt und die Bitbreitenreduktion durch einen Benutzer parametriert werden.

Gemäß einer anderen bevorzugten Weiterbildung umfasst das Verfahren den Schritt:
Ersetzen der k niedrigwertigster Bits aller Datensignale jeweils durch eine Null. Demnach ist vorgesehen, dass die k niedrigwertigsten Bits, sogenannte Least Significant Bits, LSB, aller Datensignale jeweils durch eine Null ersetzt werden. Dies kann beispielsweise aufgrund des Ersetzungssignals erfolgen, welches beispielsweise durch einen Nutzer manuell einstellbar ist, um insbesondere eine noch unter dem Schwellwert liegende Stromaufnahme und/oder Temperatur zu erhalten.

Nach einer anderen bevorzugten Weiterbildung umfasst das Verfahren den Schritt:
Ausschneiden der k niedrigwertigster Bits der Datensignale und Einfügen von Nullen als k niedrigwertigster Bits der Datensignale.

Das Ausschneiden kann insbesondere durch den vorbeschriebenen Regler und/oder Signalsteuerungsblock erfolgen, insbesondere durch ein sogenanntes Slice Element.

Gemäß einer anderen bevorzugten Weiterbildung umfasst das Verfahren den Schritt:
Ausführen der FPGA-Konfiguration in nur jedem m-ten Takt des FPGA mit m ε 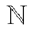 und ≥ 2.

Ergänzend zur Bitbreitenreduktion kann eine Taktfrequenz des FPGAs reduziert bzw. über Clock Enable Gating eine reduzierte Ausführungsrate erreicht werden. Nach einer anderen bevorzugten Weiterbildung ist m während des Ausführens veränderbar. Insofern kann beispielsweise die FPGA-Konfiguration nur in jedem m = 3, 4 oder 5ten Takt ausgeführt werden. Ebenso können Teile der Rechenlogik des FPGA abgeschaltet werden. Durch solche Maßnahmen lässt die Leistungsaufnahme und/oder die Temperatur des FPGA weiter verringern.

Die Aufgabe der Erfindung wird weiterhin gelöst durch ein computerimplementiertes Verfahren zum Erstellen einer FPGA-Konfiguration aufweisend eine Mehrzahl mindestens 2ⁿ Bit enthaltene Datensignale mit n ε 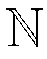 und ≥ 3, umfassend die Schritte:
Einfügen wenigstens eines Signalsteuerungsblocks in ein FPGA-Modell und/oder eine Netzliste und/oder einen HDL-Code der FPGA-Konfiguration, wobei der Signalsteuerungsblock ausgestaltet ist, k niedrigwertigste Bits der Datensignale jeweils durch eine Null mit k ε 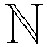 und ≥ 2 zu ersetzen,
Einfügen wenigstens eines Reglers in das FPGA-Modell und/oder die Netzliste und/oder den HDL-Code der FPGA-Konfiguration, welcher ausgestaltet ist, bei einem Überschreiten eines Schwellwertes einer Stromaufnahme und/oder einer Temperatur des FPGAs und/oder Vorliegen eines Ersetzungssignals den wenigstens einen Signalsteuerungsblock zum Ersetzen anzusteuern, und
Übertragen der FPGA-Konfiguration mit dem wenigstens einen eingefügten Signalsteuerungsblock und dem wenigstens einen eingefügten Regler auf den FPGA.

Durch das computerimplementierte Verfahren lässt sich die FPGA-Konfiguration erstellen, welche in der Folge auf den FPGA übertragbar und durch diesen ausführbar ist. Im Hinblick auf das oben vorgeschlagene Verfahren, das während eines Ausführens der FPGA-Konfiguration ausführbar ist, stellt das computerimplementierte Verfahren eine Alternativlösung für die oben angegebene Aufgabe der Erfindung dar, welches vor dem Ausführen auf dem FPGA die oben angegebene Aufgabe der Erfindung löst. Insofern ist es unzweckmäßig, diese beiden Verfahren in einem einzigen Anspruch wiederzugeben.

Mit anderen Worten kann durch das Verfahren der Signalsteuerungsblock und der Regler auf einer höheren ,Abstraktionsebene' direkt in ein grafisches Modell, d.h. in das FPGA-Modell, eingefügt werden, was insofern einfach zu realisieren ist. Durch eine Simulation kann derart ein gewünschtes Regelverhalten überprüft werden, bevor zeitaufwändige Schritte eines Erstellens und Platzierens der Netzliste durchgeführt werden.

Der Terminus HDL-Code bezeichnet Code in einer Hardwarebeschreibungssprache, wie beispielsweise VHDL oder Verilog. VHDL, ausgeschrieben Very High Speed Integrated Circuit Hardware Description Language, auch VHSIC Hardware Description Language genannt, ist dem Fachmann als eine Hardwarebeschreibungssprache bekannt, mit der es möglich ist, digitale Systeme textbasiert zu beschreiben. VHDL ist seit 1987 als IEEE-Standard festgelegt und weist gegebenenfalls ebenso standardisierte Spracherweiterungen auf.

Gemäß einer anderen bevorzugten Weiterbildung umfassen die Datensignale eine Bitbreite von 8, 16, 32, 64 oder 80 Bit und/oder k ≥ 2ⁿ⁻². Nach einer anderen bevorzugten Weiterbildung ist n = 6 und k = 29. Durch die bitweise Einspeisung des Ersatzwertes 0 für beispielsweise die unteren 29 Bit der Mantisse im Falle k = 29 und n = 6 kann die Genauigkeit eines Double Precision Signals auf die eines Single Precision Signals reduziert werden, so dass bei wesentlich geringer Stromaufnahme und/oder Temperatur noch eine in der Regel ausreichende Genauigkeit erhalten wird.

Die Aufgabe wird weiterhin gelöst durch eine FPGA-Konfiguration, umfassend einen Bitstrom, der wenn er in eine Konfigurationsebene eines FPGA geschrieben wird, diesen dazu einrichtet, ein Verfahren wie zuvor beschrieben auszuführen. Die FPGA-Konfiguration kann entweder grafisch mittels eines Schaltplans, englisch schematic, oder textuell mit einer Hardwarebeschreibungssprache, wie beispielsweise VHDL oder Verilog, welche die gesamte Funktion der Schaltung in Form von Strukturen und Abläufen beschreiben kann, erstellt werden. Ein sogenanntes Synthesewerkzeug führt diese Beschreibung wie ein Programm aus und erstellt in mehreren Schritten für einen gewünschten FPGA eine spezifische Netzliste unter Nutzung der in diesem FPGA verfügbaren Ressourcen.

Die Aufgabe wird zudem gelöst durch einen FPGA umfassend Mittel zur Ausführung eines Verfahrens wie zuvor beschrieben. Der FPGA kann wie aus dem Stand der Technik bekannt gestaltet sein, insbesondere ein Feld, englisch Array, aus Basisblöcken mit jeweils einer einfachen programmierbaren Lookup-Tabelle, LUT, und einem 1-Bit-Register, Flipflop, aufweisen. Die LUTs können, je nach Anzahl der verfügbaren Eingänge, jede beliebige n-stellige Binärfunktion realisieren. Eine Programmierung einer gewünschten Funktion erfolgt durch Hinterlegung einer definierenden Wahrheitstabelle in SRAM-Zellen der LUT, eine Funktionsberechnung durch Auslesen einer durch Eingänge bestimmten Speicheradresse.

In einer bevorzugten Weiterbildung weist der FPGA einen Stromsensor und/oder einen Temperatursensor auf, der eingerichtet ist, die Stromaufnahme und/oder die Temperatur des FPGA zu bestimmen. Der Stromsensor und/oder der Temperatursensor ist bevorzugt unmittelbar an dem FPGA vorgesehen und/oder mit diesem verbunden.

### Kurze Beschreibung der Zeichnungen

Nachfolgend wird die Erfindung unter Bezugnahme auf die anliegenden Zeichnungen anhand bevorzugter Ausführungsbeispiele näher erläutert.

### In den Zeichnungen zeigen

- Fig. 1: eine schematische Ansicht eines Reglers und eines Signalsteuerungsblocks zur Reduktion der Genauigkeit von Double Precision auf Single Precision zur Laufzeit gemäß einem bevorzugten Ausführungsbeispiel der Erfindung, und
- Fig. 2: ein Beispiel zur dynamischen Bitbreiten Anpassung für die unteren 29 Bit einer FPGA-Konfiguration zur Reduktion der Genauigkeit von Double Precision auf Single Precision gemäß dem bevorzugten Ausführungsbeispiel der Erfindung.

### Detaillierte Beschreibung der Ausführungsbespiele

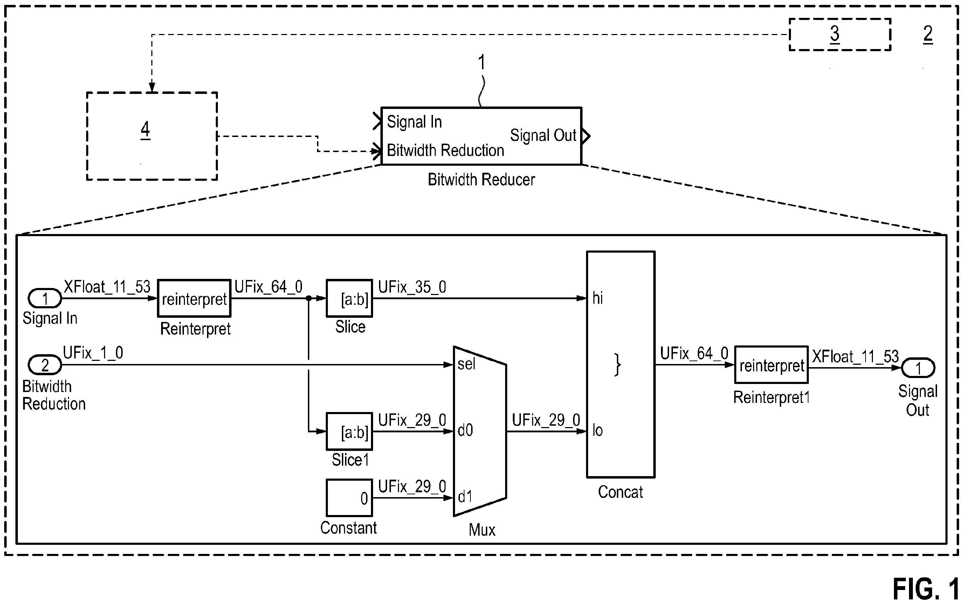

Fig. 1 zeigt eine schematische Ansicht eines Reglers 4 und eines Signalsteuerungsblocks 1 zum Ändern einer Bitbreite einer FPGA-Konfiguration für einen FPGA 2, nur schematisch dargestellt.

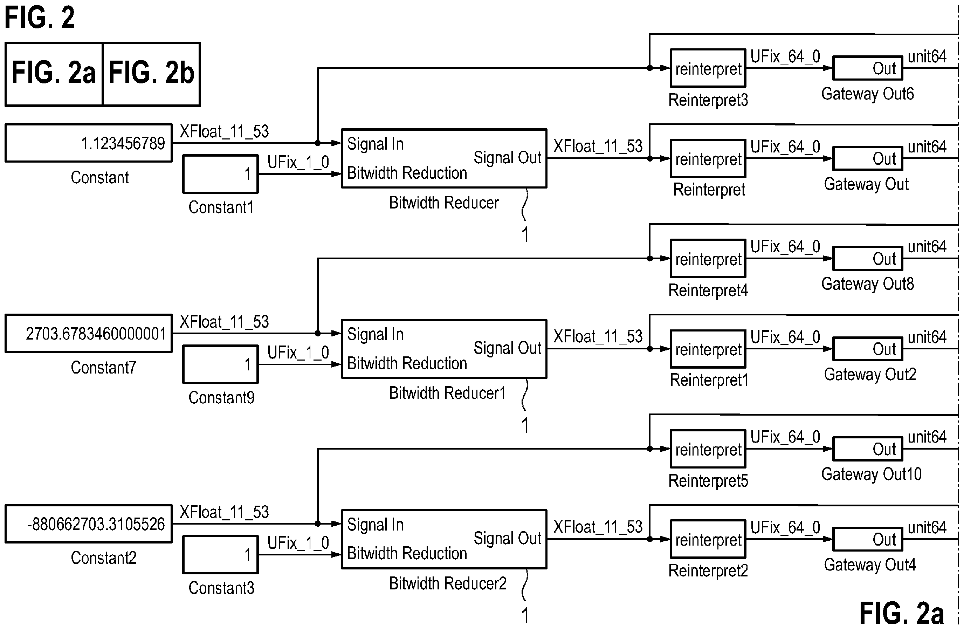

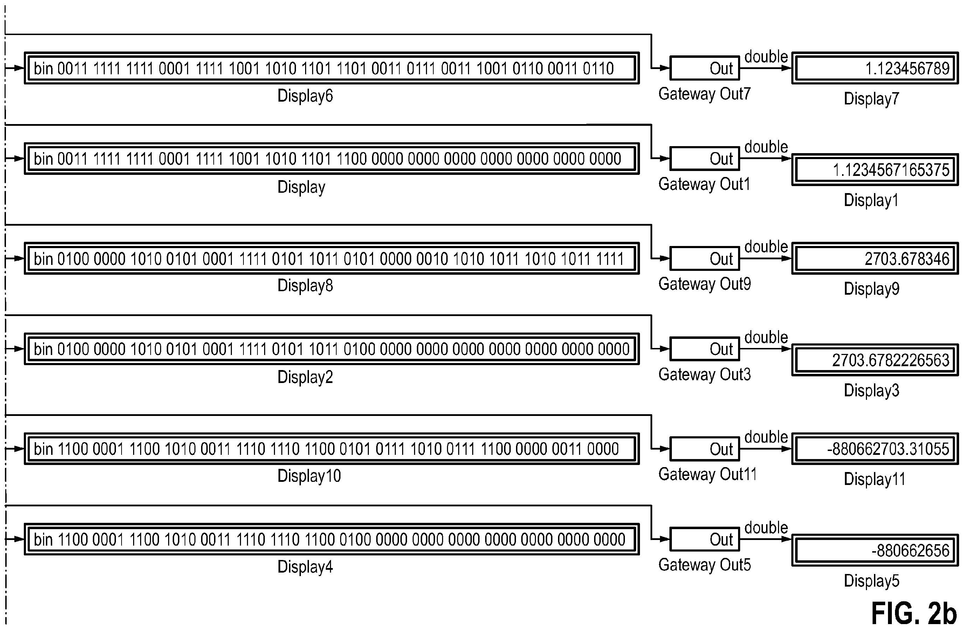

Die FPGA-Konfiguration weist eine Mehrzahl mindestens 2ⁿ Bit enthaltene Datensignale mit n ε 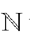 und ≥ 3 auf. Im Rahmen des vorgeschlagenen Verfahrens werden durch den Regler 4 und den Signalsteuerungsblock 1 bei einem Überschreiten eines Schwellwertes einer Stromaufnahme und/oder einer Temperatur des FPGA 2 und/oder Vorliegen eines Ersetzungssignals während eines Ausführens der FPGA-Konfiguration auf dem FPGA 2 die k niedrigwertigsten Bits der Datensignale jeweils durch eine Null mit k ε 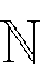 und ≥ 2 ersetzt. Bei n = 6 und k = 29, also bei einem 64 Bit Datensignal, führt das Verfahren zu einer Reduktion der Genauigkeit von Double Precision auf Single Precision. Fig. 2 zeigt ein entsprechendes Beispiel zur dynamischen Bitbreiten Anpassung für die unteren 29 Bit der FPGA-Konfiguration gemäß dem bevorzugten Ausführungsbeispiel der Erfindung.

Konkret besteht das Verfahren aus folgenden Schritten:
Zunächst erfolgt eine automatische Modifikation eines FPGA Models/Netzliste/VHDL Code als FPGA-Konfiguration vor einem FPGA Build in einem temporären Model/Netzliste/VHDL Code, in dem der Regler 4 und Signalsteuerungsblock 1 zur adaptiven dynamischen Bitbreiten-Anpassung eingefügt wird. Als Führungsgröße dienen die Stromaufnahme und/oder die Temperatur des FPGA 2, die mittels eines nur schematisch gezeigten Stromsensors und/oder Temperatursensors 3 bestimmbar sind.

Ebenso kann die Führungsgröße extern durch einen Benutzer als Ersetzungssignal vorgegeben werden, beispielsweise wenn die Stromaufnahme noch weiter unter den Schwellwert abgesenkt werden soll. Der Regler 4 kann ferner mit einer Hysteresefunktion beim Reduzieren und Zurückgehen auf volle Genauigkeit ausgestattet sein. Ebenso optional kann der Regler vom FPGA 2 oder einem externen Prozessor parametrisierbar sein. So kann es vorgesehen sein, dass der Regler 4 ein externes Ersetzungssignal erhält und daraufhin den oder die Signalsteuerungsblöcke aktiviert.

Wie bereits angesprochen, sind die Führungsgrößen die Stromaufnahme des FPGA 2 insbesondere als Kurzzeit-Kriterium und/oder die Temperatur des FPGA 2 insbesondere als Langzeit-Kriterium, sowie alternativ das Ersetzungssignal. Ebenso kann der Regler 4 schon während der Modellierung im Model zur Bitbreiten Anpassung vorgesehen sein und der Nutzer erhält Temperatur und Strom als Ausgangssignale des Reglers 4 um manuell die Bitbreite anzupassen. Dazu kann im Regler 4 die "Automatik" per Ersetzungssignal deaktiviert bzw. durch eine individuell modellierte Vorgabe zur Bitweitenreduktion ersetzt werden.

In der Folge werden alle möglichen Model Input Blöcke und Berechnungsblöcke gesucht und der Regler und Signalsteuerungsblock 1 für alle Model Input Blöcke eingefügt, die Datensignale beinhalten. Bei Floating Point Datensignalen lässt sich dies in der Regel eindeutig erkennen, während bei Fixed Point Datensignalen ein Nutzer gegebenenfalls kennzeichnen muss, ob ein Datensignal Daten oder Bitmasken/Befehle enthält.

Alternativ kann vom Blockset automatisiert analysiert werden, ob das Datensignal im Model verrechnet wird und somit ein reduzierbares Datensignal ist. Ebenso wird der Signalsteuerungsblock 1 für Model Berechnungsblöcke eingefügt, die die genullten niedrigwertigsten Bits gegebenenfalls wieder können, beispielsweise in einem Multiplexer. Schließlich wird ein Ausgang des Reglers 4 mit einem Eingang des Signalsteuerungsblock 1 verbunden.

Als Ergebnis wird der FPGA Build des mit der dynamischen Bitbreiten-Anpassung modifizierten Models erhalten, welches als FPGA-Konfiguration auf dem FPGA ausführbar ist. Gegebenenfalls kann die FPGA-Konfiguration mit reduzierter Genauigkeit getestet werden, um zu verifizieren, dass der Regler nicht instabil wird, sobald die Bitbreite reduziert wird.

Bei der vorgeschriebenen Umschaltung von Double Precision auf Single Precision besteht die Möglichkeit, dass 29 der 64 Bits nicht mehr zu toggeln sind. Experimentell hat sich gezeigt, dass die Leistungsaufnahme um 45,3% reduzierter ist. Bei Half Precision ist die Leistungsaufnahme sogar um 65,6% und bei Quarter Precision um 79,7% reduzierbar. Eine noch weitere Absenkung der Leistungsaufnahme lässt sich dann erreichen, wenn die FPGA-Konfiguration in nur jedem m-ten Takt des FPGA mit m ε 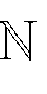 und ≥ 2 aufgeführt wird, also bei-spielsweise nur in jedem dritten oder vierten Takt.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Signalsteuerungsblock | 1 |
| FPGA | 2 |
| Stromsensor und/oder Temperatursensor | 3 |
| Regler | 4 |

## Patentansprüche

1. Verfahren zum Ändern einer Bitbreite einer FPGA-Konfiguration für einen FPGA (2), die FPGA-Konfiguration aufweisend eine Mehrzahl mindestens 2ⁿ Bit enthaltene Datensignale mit n ε 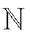 und ≥ 3 und das Verfahren aufweisend den Schritt:
Bei einem Überschreiten eines Schwellwertes einer Stromaufnahme und/oder einer Temperatur des FPGA (2) und/oder Vorliegen eines Ersetzungssignals, Ersetzen während eines Ausführens der FPGA-Konfiguration auf dem FPGA (2) von k niedrigwertigster Bits der Datensignale jeweils durch eine Null mit k ε 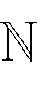 und ≥ 2.

2. Verfahren nach dem vorhergehenden Anspruch, wobei das Ersetzen ein Einfügen wenigstens eines Reglers (4) und wenigstens eines Signalsteuerungsblocks (1) umfasst, welcher wenigstens eine Signalsteuerungsblock ausgestaltet ist, die k niedrigwertigsten Bits der Datensignale jeweils durch eine Null zu ersetzen, und welcher wenigstens eine Regler (4) ausgestaltet ist, bei einem Überschreiten des Schwellwertes der Stromaufnahme und/oder der Temperatur des FPGAs und/oder Vorliegen des Ersetzungssignals den wenigstens einen Signalsteuerungsblock zum Ersetzen anzusteuern.

3. Verfahren nach einem der vorhergehenden Ansprüche, mit dem Schritt:
Ersetzen der k niedrigwertigster Bits aller Datensignale jeweils durch eine Null.

4. Verfahren nach einem der vorhergehenden Ansprüche, mit dem Schritt:
Ausschneiden der k niedrigwertigster Bits der Datensignale und Einfügen von Nullen als k niedrigwertigster Bits der Datensignale.

5. Verfahren nach einem der vorhergehenden Ansprüche, mit dem Schritt:
Ausführen der FPGA-Konfiguration in nur jedem m-ten Takt des FPGA (2) mit m ε 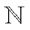 und ≥ 2.

6. Verfahren nach dem vorhergehenden Anspruch, wobei m während des Ausführens veränderbar ist.

7. Computerimplementiertes Verfahren zum Erstellen einer FPGA-Konfiguration aufweisend eine Mehrzahl mindestens 2ⁿ Bit enthaltene Datensignale mit n ε 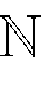 und ≥ 3, umfassend die Schritte:
Einfügen wenigstens eines Signalsteuerungsblocks (1) in ein FPGA-Modell und/oder eine Netzliste und/oder einen HDL-Code der FPGA-Konfiguration, wobei der Signalsteuerungsblock (1) ausgestaltet ist, k niedrigwertigste Bits der Datensignale jeweils durch eine Null mit k ε 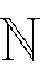 und ≥ 2 zu ersetzen,
Einfügen wenigstens eines Reglers (4) in das FPGA-Modell und/oder die Netzliste und/oder den HDL-Code der FPGA-Konfiguration, welcher ausgestaltet ist, bei einem Überschreiten eines Schwellwertes einer Stromaufnahme und/oder einer Temperatur des FPGAs und/oder Vorliegen eines Ersetzungssignals den wenigstens einen Signalsteuerungsblock zum Ersetzen anzusteuern, und
Übertragen der FPGA-Konfiguration mit dem wenigstens einen eingefügten Signalsteuerungsblock (1) und dem wenigstens einen eingefügten Regler (4) auf den FPGA.

8. Verfahren nach einem der vorhergehenden Ansprüche, wobei die Datensignale eine Bitbreite von 8, 16, 32, 64 oder 80 Bit umfassen und/oder k ≥ 2ⁿ⁻².

9. Verfahren nach einem der vorhergehenden Ansprüche, mit n = 6 und k = 29.

10. FPGA-Konfiguration, umfassend einen Bitstrom, der wenn er in eine Konfigurationsebene eines FPGA (2) geschrieben wird, diesen dazu einrichtet, ein Verfahren nach einem der vorhergehenden Verfahrens-Ansprüche auszuführen.

11. FPGA (2) umfassend Mittel zur Ausführung eines Verfahrens nach einem der vorhergehenden Verfahrens-Ansprüche.

12. FPGA nach dem vorhergehenden Anspruch, mit einem Stromsensor und/oder einem Temperatursensor (3) eingerichtet die Stromaufnahme und/oder die Temperatur des FPGA (2) zu bestimmen.
